# EUROPEAN PATENT SPECIFICATION

(11) **EP 3 940 027 B1**
(45) Date of publication and mention of the grant of the patent: **10.05.2023**
(21) Application number: 19920230.0
(22) Date of filing: 24.12.2019
(51) Int. Cl.: C08L 7/00, C08L 9/06, F16L 11/04, C08K 3/04, C08K 3/30

(54) **RUBBER COMPOSITION FOR SEMICONTINUOUS MARINE HOSE AND SEMICONTINUOUS MARINE HOSE**
KAUTSCHUKZUSAMMENSETZUNG FÜR HALBKONTINUIERLICHEN UNTERWASSERSCHLAUCH UND HALBKONTINUIERLICHER UNTERWASSERSCHLAUCH
COMPOSITION DE CAOUTCHOUC POUR TUYAU MARIN SEMI-CONTINU ET TUYAU MARIN SEMI-CONTINU

(30) Priority: 15.03.2019 JP 2019048804
(43) Date of publication of application: 19.01.2022
(73) Proprietor: The Yokohama Rubber Co., Ltd., Tokyo 105-8685 (JP)
(72) Inventor: IKAI, Koichi, Hiratsuka City, Kanagawa 2548601 (JP)
(74) Representative: Grünecker Patent- und Rechtsanwälte PartG mbB
(86) International application number: PCT/JP2019/050641
(87) International publication number: WO 2020/188939

(56) References cited:
- WO-A1-2017/038199
- JP-A- H04 131 581
- JP-A- 2013 531 109
- JP-A- 2017 207 106
- JP-A- 2017 207 106
- JP-B2- 5 787 735
- US-A1- 2009 189 616
- US-A1- 2013 098 494

## Description

### Technical Field

The present invention relates to a rubber composition for a semicontinuous marine hose and a semicontinuous marine hose.

### Background Art

A marine hose is a hose used for, for example, transporting liquid fuel such as crude oil from a crude oil supplying facility in the sea to an offshore tanker, from an offshore tanker to a land-based plant, or from a tanker to a tanker.

In general, the form of a marine hose includes a form having a hose body and mouthpieces formed of a conductive material and provided on both ends of the hose body.

As a method for producing a marine hose, for example, a method of manufacturing a marine hose that includes at least a base hose, a sponge layer, a foam rubber layer, and a cover rubber layer has been proposed, the method comprising: wrapping a sponge layer A around the base hose; wrapping a foam rubber layer B around the sponge layer A, the foam rubber layer B being formed from an unvulcanized foam rubber composition; wrapping a cover rubber layer around its outside, and performing vulcanization; wherein the foamed rubber composition contains 100 parts by mass of a rubber component containing at least one selected from the group consisting of natural rubber, styrene-butadiene rubber, chloroprene rubber, ethylene-propylene rubber, ethylene propylene diene rubber, and reclaimed rubber as a main component, from 1.1 to 50 parts by mass of a foaming agent, and from 1.1 to 50 parts by mass of a foaming aid, and a foaming ratio of the foam rubber composition after vulcanization is 1.1 or greater (Patent Document 1). Examples of rubber compositions with reduced electrical resistance are disclosed in Patent Documents 3 to 6.

Also, for the purpose of providing a marine hose that is advantageous in keeping the electrical resistance between the mouthpieces at both ends within the required range while suppressing the variation in the electrical resistance between the mouthpieces at both ends, a marine hose has been proposed, the marine hose including a hose body in which at least an outer peripheral surface thereof is formed of an insulator, a mouthpiece formed of a conductive material and provided at both ends of the hose body respectively, and a conductor extending along the hose body and electrically connecting the mouthpieces at both ends, wherein a semi-conductor is provided in the conductor so that the electrical resistance between the mouthpieces at both ends of the conductor is within a desired range (Patent Document 2).

### Citation List

### Patent Literature

Patent Document 1: JP 2015-209885 A
Patent Document 2: JP 2018-168942 A
Patent Document 3: JP 2017-207106 A
Patent Document 4: US 2013/098494 A1
Patent Document 5: US 2009/189616 A1
Patent Document 6: JP 5 787735 B2

### Summary of Invention

### Technical Problem

In recent years, semicontinuous marine hoses (semicon hoses) have been demanded as marine hoses. Semicon hoses typically refer to semi-conductive marine hoses with resistance values ranging from 25000 to 1000000 Ω.

Under such circumstances, the present inventor conceived that when the marine hose as in Patent Document 2 is bent, it may be difficult to control the conductivity because the conductor (for example, the metal wire wound around the hose body) that electrically connects the mouthpieces at both ends is kinked.

Therefore, the present inventor conceived that in order to produce a semicon hose that is free of conductors that electrically connect the mouthpieces at both ends as described above, it is essential to introduce a conductive rubber having a controlled resistance value into the hose body of the semicon hose.

When the present inventor prepared and evaluated the rubber composition according to Patent Document 1 for use in the hose body of a semicon hose, it has been discovered that the conductivity of the rubber obtained from the rubber composition as described above may not be suitable for semicon hoses.

Therefore, an object of the present invention is to provide a rubber composition that can appropriately control the conductivity of the obtained rubber for use in semicon hoses.

Further, another object of the present invention is to provide a semicon hose whose conductivity is appropriately controlled.

### Solution to Problem

As a result of diligent research to solve the problems described above, the present inventor discovered that a desired effect can be obtained by using a rubber composition containing a diene rubber containing at least a natural rubber and a styrene-butadiene rubber, and carbon black, in which the carbon black has a volume ratio from 14 to 18% and wherein the rubber composition has a volume resistivity from 1.0 × 10³ to 5.0 × 10⁴ Ω·cm, the volume resistivity being measured by using a volume resistivity meter under a condition of 23°C, 50% RH, and an applied voltage of 500 V in accordance with JIS K6271-2: 2015; and wherein a mass ratio of the natural rubber to the styrene-butadiene rubber (natural rubber/styrene-butadiene rubber) is from 30/70 to 80/20, and thus the present invention was achieved.

An embodiment of the present invention is based on the findings described above, and specifically solves the problems described above by the following configurations.
[1] A rubber composition for a semicontinuous marine hose comprising a diene rubber containing at least a natural rubber and a styrene-butadiene rubber, and carbon black,
   the carbon black having a volume ratio from 14 to 18%, and
   the rubber composition having a volume resistivity being from 1.0 × 10³ to 5.0 × 10⁴ Q cm, the volume resistivity being measured by using a volume resistivity meter under a condition of 23°C, 50% RH, and an applied voltage of 500 V in accordance with JIS K6271-2: 2015; wherein a mass ratio of the natural rubber to the styrene-butadiene rubber (natural rubber/styrene-butadiene rubber) is from 30/70 to 80/20,.
[2] The rubber composition for a semicontinuous marine hose according to [1], which further contains sulfur and has a sulfur content of 2.5 parts by mass or more with respect to 100 parts by mass of the diene rubber.
[3] The rubber composition for a semicontinuous marine hose according to [1] or [2], which further contains a vulcanization accelerator and has a vulcanization accelerator content of 1.5 parts by mass or less with respect to 100 parts by mass of the diene rubber.
[4] The rubber composition for a semicontinuous marine hose according to any one of [1] to [3], which further contains a plasticizer, the plasticizer containing aroma oil and having an aroma oil content of 25 parts by mass or more with respect to 100 parts by mass of the diene rubber.
[5] The rubber composition for a semicontinuous marine hose according to any one of [1] to [4], which does not substantially contain reclaimed rubber.
[6] A semicontinuous marine hose formed by using the rubber composition for a semicontinuous marine hose described in any one of [1] to [5].
[7] The semicontinuous marine hose according to [6], which includes a rubber layer A formed by using the rubber composition for a semicontinuous marine hose.
[8] The semicontinuous marine hose according to [7], which further contains a cover rubber and a breaker rubber, wherein the cover rubber, the rubber layer A, and the breaker rubber are adjacent in the order of the cover rubber, the rubber layer A, and the breaker rubber.

### Advantageous Effects of Invention

The rubber composition for a semicontinuous marine hose of the present invention can appropriately control the conductivity of the obtained rubber so as to be suitable for the use of the semicontinuous marine hose.

The semicontinuous marine hose of the present invention has appropriate conductivity for a semicontinuous marine hose.

### Brief Description of Drawings

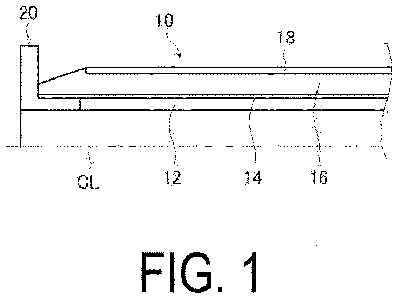

[FIG. 1] FIG. 1 is a partial cross-sectional view schematically showing an example of the semicontinuous marine hose according to an embodiment of the present invention.

### Description of Embodiments

Embodiments of the present invention will be described in detail below.

Note that in the present specification, value range indicated by using "from... to..." means the range including the former value as a lower limit value and the latter value as an upper limit value.

In the present specification, unless otherwise indicated, a substance corresponding to each component can be used alone or in combination of two or more types thereof. In a case where a component includes two or more types of substances, content of component means the total content of the two or more types of substances.

### Rubber Composition for Semicontinuous Marine Hose

The rubber composition for a semicontinuous marine hose according to an embodiment of the present invention (the composition according to an embodiment of the present invention) is a rubber composition for a semicontinuous marine hose containing at least one a natural rubber and a styrene-butadiene rubber, and carbon black, in which the carbon black has a volume ratio of 14 to 18%, and the rubber composition has a volume resistivity is 1.0 × 10³ to 5.0 × 10⁴ Q cm, the volume resistivity being measured by using a volume resistivity meter under a condition of 23°C, 50% RH, and an applied voltage of 500 V in accordance with JIS K6271-2: 2015; and wherein a mass ratio of the natural rubber to the styrene-butadiene rubber (natural rubber/styrene-butadiene rubber) is from 30/70 to 80/20,.

The composition according to an embodiment of the present invention is thought to achieve desired effects as a result of having such a configuration. Although the reason is not clear, the volume resistivity of the rubber composition according to an embodiment of the present invention can be set within the above-mentioned specific range by the balance between the electrical resistance of the diene rubber itself and the electrical resistance of carbon black according to its volume ratio, therefore it is presumed that the conductivity of the obtained rubber can be appropriately controlled so as to meet the conductivity required for a semicontinuous marine hose.

Each of the components included in the composition according to an embodiment of the present invention will be described in detail below.

### Diene rubber

In the composition according to an embodiment of the present invention, the diene rubber contains at least a natural rubber and a styrene-butadiene rubber.

### Natural Rubber

The natural rubber that can be used as the diene rubber is not particularly limited. Examples thereof include a known natural rubber.

### Styrene-butadiene Rubber

The styrene-butadiene rubber (SBR) that can be used as the diene rubber is not particularly limited as long as it is a copolymer of styrene and butadiene. Examples thereof include a known styrene-butadiene rubber.

The weight average molecular weight of the SBR is preferably from 3.0 × 10⁵ to 1.0 × 10⁶, and more preferably 4.0 × 10⁵ to 8.0 × 10⁵ from the viewpoint of being superior in the effects of the present invention, and being excellent in physical properties (for example, tensile properties; the same applies hereinafter), adhesiveness to other rubber layers, or processability of the composition (for example, mixing processability of the composition; the same applies hereinafter).

The weight average molecular weight of SBR can be measured by gel permeation chromatography (GPC) calibrated with polystyrene standards using tetrahydrofuran (THF) as a solvent.

The amount of styrene in the SBR (content of styrene with respect to the entire amount of SBR) is preferably from 20.0 to 35.0% by mass, more preferably from 22.5 to 24.5% by mass, from the viewpoint of being superior in the effects of the present invention, and being excellent in physical properties, adhesiveness to other rubber layers, or processability of the composition.

The styrene amount of SBR can be measured by ¹H-NMR.

The diene rubber contains a natural rubber and a styrene-butadiene rubber from the viewpoint of being superior in the effects of the present invention, and being excellent in physical properties, adhesiveness to other rubber layers, or processability of the composition.

When the diene rubber contains the natural rubber and the styrene-butadiene rubber, the mass ratio of the natural rubber to the styrene-butadiene rubber (natural rubber/styrene-butadiene rubber) is preferably from 30/70 to 80/20, and more preferably from 60/40 to 80/20, from the viewpoint of being superior in the effects of the present invention, and being excellent in physical properties, adhesiveness to other rubber layers, or processability of the composition.

The diene rubber may further contain another diene rubber besides the natural rubber and the styrene-butadiene rubber.

The other diene rubber mentioned above is not particularly limited. Examples of the other diene rubbers include butadiene rubber, synthetic isoprene rubber, styrene-isoprene rubber, styrene-butadiene-isoprene rubber, and acrylonitrile-butadiene rubber.

The diene rubber preferably contains only the natural rubber and the styrene-butadiene rubber, from the viewpoint of being superior in the effects of the present invention, and being excellent in physical properties, adhesiveness to other rubber layers, or processability of the composition.

Note that, in the present invention, one of the preferred embodiments is that the diene rubber does not contain reclaimed rubber.

### Carbon Black

The carbon black (CB) contained in the composition according to an embodiment of the present invention is not particularly limited.

Examples of the carbon black include various grades of carbon black such as High Abrasion Furnace (HAF) grade carbon black, General Purpose Furnace (GPF) grade carbon black, and Fast Extruding Furnace (FEF) grade carbon black.

Among these, HAF grade CB is preferable, from the viewpoint of being superior in the effects of the present invention, and being excellent in physical properties, adhesiveness to other rubber layers, processability of the composition, or dispersibility of CB.

A nitrogen adsorption specific surface area (N₂SA) of the carbon black is preferably from 25 to 100 m²/g, and more preferably from 65 to 95 m²/g, from the viewpoint of being superior in the effects of the present invention, and being excellent in physical properties, adhesiveness to other rubber layers, processability of the composition, or dispersibility of CB.

In the present invention, the nitrogen adsorption specific surface area of carbon black is a value obtained by measuring the amount of nitrogen adsorbed on the surface of carbon black according to JIS K 6217-2:2017 "Carbon black for rubber industry - Fundamental characteristics - Part 2: Determination of specific surface area - Nitrogen adsorption methods - Single-point procedures".

Note that, in the present invention, one of the preferred embodiments is that the carbon black does not contain carbon black derived from reclaimed rubber.

### Volume Ratio of Carbon Black

In the present invention, the volume ratio of the carbon black is from 14 to 18%.

The volume ratio of the carbon black is a ratio in percentage by volume of the carbon black to the total (volume) of the composition according to an embodiment of the present invention.

Note that, in the present invention, the volume of the rubber composition before and after curing (vulcanization) is approximately the same, except that the composition according to an embodiment of the present invention further contains a component that foams rubber, such as a foaming agent.

Additionally, when the rubber composition forms a foam body after vulcanization, the volume ratio of the carbon black may be evaluated based on the volume of the rubber composition before curing (vulcanization).

Note that when the composition according to an embodiment of the present invention further includes reclaimed rubber, the volume ratio of the carbon black does not include carbon black derived from reclaimed rubber. In addition, when the composition according to an embodiment of the present invention further includes reclaimed rubber, for calculation of the CB volume ratio, the total volume of the composition according to an embodiment of the present invention shall include the total amount of reclaimed rubber.

In the present invention, the volume ratio is a calculated value.

The density of carbon black under the condition of 20°C is 1.80 g/cm³, and the volume of carbon black was calculated from the weight of carbon black used in the present invention.

Similarly, for the components other than carbon black, the volume of each component is calculated from the weight of each component used in the present invention based on the density of each component under the condition of 20°C.

The volume ratio of the carbon black is preferably from 14.0 to 18.0%, more preferably from 15.0 to 18.0%, and still more preferably from 16.5 to 18.0%, from the viewpoint of being superior in the effects of the present invention, and being excellent in physical properties, adhesiveness to other rubber layers, processability of the composition, or dispersibility of CB, and from the viewpoint of being superior in control of electrical resistance and being excellent in mechanical properties.

### Volume Resistivity

In the present invention, the volume resistivity (volume specific resistivity) is from 1.0 × 10³ to 5.0 × 10⁴ Ω•cm.

The volume resistivity is the volume resistivity of rubber after curing (vulcanization) of the composition according to an embodiment of the present invention.

In the present invention, the volume resistivity was measured using a volume resistivity meter under a condition of 23°C, 50% RH, and an applied voltage of 500 V in accordance with JIS K6271-2: 2015 (Rubber, vulcanized or thermoplastic - Determination of resistivity - Part 2: Parallel terminal electrode system).

The volume resistivity is preferably from 3.0 × 10³ to 1.0 × 10⁴ Ω·cm, from the viewpoint of being superior in the effects of the present invention, and being excellent in physical properties, adhesiveness to other rubber layers, or processability of the composition.

### Sulfur

The composition according to an embodiment of the present invention preferably further contains sulfur.

The sulfur is not particularly limited. Examples thereof include a known substance.

The sulfur content is preferably 2.5 parts by mass or more with respect to 100 parts by mass of the diene rubber, from the viewpoint of being superior in the effects of the present invention, and being excellent in physical properties, adhesiveness to other rubber layers, or processability of the composition.

The sulfur content can be 5.0 parts by mass or less with respect to 100 parts by mass of the diene rubber.

### Vulcanization Accelerator

The composition according to an embodiment of the present invention preferably further contains a vulcanization accelerator.

The vulcanization accelerator is not particularly limited. For example, known ones can be used. Among them, a sulfenamide vulcanization accelerator is preferable, from the viewpoint of being superior in the effects of the present invention, and being excellent in physical properties, adhesiveness to other rubber layers, or processability of the composition.

### •Content of vulcanization accelerator

The content of the vulcanization accelerator is preferably 1.5 parts by mass or less with respect to 100 parts by mass of the diene rubber, from the viewpoint of being superior in the effects of the present invention, and being excellent in physical properties, adhesiveness to other rubber layers, or processability of the composition.

The content of the vulcanization accelerator can be 0.5 parts by mass or more with respect to 100 parts by mass of the diene rubber.

### Plasticizer

The composition according to an embodiment of the present invention preferably further contains a plasticizer.

The plasticizer is not particularly limited as long as it can be used in a rubber composition.

The plasticizer preferably contains an aroma oil, from the viewpoint of being superior in the effects of the present invention, and being excellent in physical properties, adhesiveness to other rubber layers, processability of the composition, or dispersibility of CB.

### •Aroma oil

The aroma oil contains at least an aromatic hydrocarbon.

Examples of the aroma oil include those in which the weight percentage (C_{A}) of the aromatic hydrocarbon determined in accordance with ASTM D2140 is from 15 to 70% by mass.

Examples of the aroma oil include Treatd Distillate Aromatic Extract (TDAE) oil.

### •Content of Aroma oil

The content of the aroma oil is preferably 25 parts by mass or greater, and more preferably from 25 to 40 parts by mass, with respect to 100 parts by mass of the diene rubber, from the viewpoint of being superior in the effects of the present invention, and being excellent in physical properties, adhesiveness to other rubber layers, or processability of the composition.

Examples of the plasticizer include naphthenic oils; paraffinic oils; polyolefins; diisononyl adipate (DINA), diisononyl phthalate (DINP), dioctyl adipate, isodecyl succinate, butyl oleate; tricresyl phosphate, and trioctyl phosphate, in addition to the aroma oil.

The plasticizer may be either a component later added to the composition or a component contained as an oil-extending component in the diene rubber.

The composition according to an embodiment of the present invention can further contain additives.

Examples of the additives include rubber other than diene rubber, resins, white fillers such as calcium carbonate, flame retardants, anti-aging agents, antioxidants, corrosion inhibitors, photostabilizer, ultraviolet absorbers, polymerization inhibitors, silane coupling agents, crosslinking agents, organic peroxides, vulcanization aids, magnesium oxide, waxes, zinc oxide, and stearic acid.

### Reclaimed rubber

The compositions according to an embodiment of the present invention may or may not further contain reclaimed rubber.

The reclaimed rubber refers to a rubber that reuses the used vulcanized rubber. The reclaimed rubber is stipulated in JIS K6313: 1999. Reclaimed rubbers include, for example, rubber obtained by grinding and/or desulfurization of a used rubber product.

The reclaimed rubber may contain carbon black.

The present inventor has found that carbon black contained in reclaimed rubber has a different effect on the electrical conductivity of the rubber composition from carbon black used as a general compounding agent for rubber (for example, the carbon black contained in the composition according to an embodiment of the present invention).

Examples of the effect of carbon black contained in the reclaimed rubber include a large variation in the volume eigen resistivity value of the obtained rubber, etc.

The composition according to an embodiment of the present invention can have a volume ratio of carbon black derived from reclaimed rubber of, for example, from 0 to 5% based on the total volume of the composition according to an embodiment of the present invention.

The volume ratio of carbon black derived from reclaimed rubber is preferably from 0 to 1.0%, and more preferably 0%, based on the total volume of the composition according to an embodiment of the present invention, from the viewpoint that the variation in the volume eigen resistivity value of the obtained rubber is small and the physical properties, the adhesiveness to other rubber layers, or the processability of the composition are excellent.

The composition according to an embodiment of the present invention preferably contains substantially no reclaimed rubber, from the viewpoint that the variation in the volume eigen resistivity value of the obtained rubber is small and the physical properties, the adhesiveness to other rubber layers, or the processability of the composition are excellent.

In the present invention, "substantially no reclaimed rubber" means that the content of the reclaimed rubber is from 0 to 1.0% by mass with respect to the total amount of the composition according to an embodiment of the present invention.

### Foaming Agent

The composition according to an embodiment of the present invention preferably contains substantially no foaming agent.

The foaming agent is not particularly limited as long as it is a compound capable of foaming the rubber composition.

In the present invention, "substantially no foaming agent" means that the content of the foaming agent is from 0 to 1.0% by mass with respect to the total amount of the composition according to an embodiment of the present invention.

### Method for Producing Rubber Composition

Production method of the composition according to an embodiment of the present invention is not particularly limited. Examples thereof include a method of producing the composition according to an embodiment of the present invention by mixing a predetermined diene rubber, carbon black, and, if necessary, sulfur, a vulcanization accelerator, and additives that can be used, with a Banbury mixer or the like.

The curing conditions (vulcanization conditions) for the composition according to an embodiment of the present invention are not particularly limited. The composition according to an embodiment of the present invention can be cured (vulcanized) by heating under conditions of approximately 130°C to 180°C, for example. Pressurization may be performed as necessary.

### Application

Using the composition according to an embodiment of the present invention, for example, a semicontinuous marine hose and a high pressure rubber hose can be formed.

When forming a semicontinuous marine hose using the composition according to an embodiment of the present invention, the component of the semicontinuous marine hose formed from the composition according to an embodiment of the present invention is not particularly limited.

The composition according to an embodiment of the present invention can form a hose body other than a mouthpiece in the semicontinuous marine hose.

The composition according to an embodiment of the present invention can constitute a portion of the hose body of the semicontinuous marine hose other than, for example, a cover rubber, a breaker rubber, or a tube rubber.

The rubber layer A formed by using the composition according to an embodiment of the present invention is preferably between the cover rubber and the breaker rubber, and more preferably adjacent to both of the cover rubber and the breaker rubber.

### Semicontinuous Marine Hose

The semicontinuous marine hose according to an embodiment of the present invention (the semicon hose according to an embodiment of the present invention) is a semicontinuous marine hose formed by using the rubber composition for a semicontinuous marine hose according to an embodiment of the present invention.

The rubber composition for a semicontinuous marine hose used in the semicon hose according to an embodiment of the present invention is not particularly limited as long as it is the rubber composition for a semicontinuous marine hose according to an embodiment of the present invention.

Examples of the semicon hose according to an embodiment of the present invention include a form having a hose body and a mouthpiece made of conductive material and provided at both ends of the hose body.

The hose body can be formed from at least a rubber.

The semicon hose according to an embodiment of the present invention preferably has a rubber layer A formed by using the rubber composition for a semicontinuous marine hose. The rubber layer A may form at least a portion of the hose body.

The semicon hose according to an embodiment of the present invention can further have a cover rubber and a breaker rubber in addition to the rubber layer A in the hose body.

In the semicon hose according to an embodiment of the present invention, it is preferable that the cover rubber, the rubber layer A, and the breaker rubber are adjacent in the order described above in the hose body.

When the semicon hose according to an embodiment of the present invention further includes, in addition to the rubber layer A, a cover rubber, a breaker rubber, and a tube rubber, the cover rubber, the rubber layer A, the breaker rubber, and the tube rubber are preferably adjacent in the order described above.

### •Cover rubber

The cover rubber can form the outermost layer of the hose portion of the semicon hose according to an embodiment of the present invention.

The cover rubber (or the rubber composition used to form the cover rubber) preferably contains natural rubber from the viewpoint of excellent adhesiveness to the rubber layer A. The natural rubber is not particularly limited. For example, known ones can be used.

In addition to natural rubber, the cover rubber (or a rubber composition used to form the cover rubber) can further contain, for example, polymers other than natural rubber, fillers, plasticizers, anti-aging agents, waxes, zinc oxide, stearic acid, sulfur, and vulcanization accelerators.

### •Breaker rubber

The breaker rubber can function as a tie rubber (adhesive rubber).

When the breaker rubber is, for example, between the rubber layer A and the tube rubber, the breaker rubber can adhere the rubber layer A and the tube rubber.

The breaker rubber (or a rubber composition used to form the breaker rubber) preferably contains acrylonitrile-butadiene rubber (NBR) and styrene-butadiene rubber (SBR) from the viewpoint of excellent adhesiveness to the rubber layer A. The NBR is not particularly limited. For example, known ones can be used. The same applies to the above SBR.

In addition to NBR and SBR, the breaker rubber can further includes, for example, polymers other than NBR and SBR; fillers such as CB and silica; anti-aging agents, zinc oxide, stearic acid; adhesion promoters such as resorcin; plasticizers, waxes, sulfur, and vulcanization accelerators.

When the breaker rubber contains NBR and SBR, the mass ratio of the NBR to the SBR (NBR/SBR) is preferably from 30/70 to 90/10, and more preferably from 60/40 to 85/15, from the viewpoint of excellent physical properties or adhesiveness to other rubber layers.

When the cover rubber (or a rubber composition used to form the cover rubber) contains natural rubber, the breaker rubber (or a rubber composition used to form the breaker rubber) contains acrylonitrile-butadiene rubber (NBR) and styrene-butadiene rubber (SBR), and the cover rubber, rubber layer A, and breaker rubber are adjacent in this order, preferably, the vulcanization rates of the cover rubber, the rubber layer A and the breaker rubber are approximately the same when manufacturing the semicon hose according to an embodiment of the present invention because the adhesiveness between the cover rubber and the rubber layer A and the adhesiveness between the rubber layer A and the breaker rubber can be increased.

The semicon hose according to an embodiment of the present invention will be described below with reference to the attached drawings. However, the present invention is not limited to the attached drawings.

FIG. 1 is a partial cross-sectional view schematically illustrating an example of a semicontinuous marine hose according to the present invention.

In FIG. 1, the semicontinuous marine hose 10 (semicon hose 10) includes a mouthpiece 20 at its end, and a cover rubber 18, a rubber layer A 16, a breaker rubber 14, and a tube rubber 12 are adjacent in this order in a hose body other than the mouthpiece 20. The line segment CL is a center line extending in the axial direction of the semicon hose 10.

The semicon hose according to an embodiment of the present invention can include the mouthpiece at both ends. The mouthpiece is preferably made of metal. The shape of the mouthpiece is not particularly limited.

As the method for producing the semicon hose according to an embodiment of the present invention, for example, there is a method in which a hose main body is formed by winding a rubber composition capable of forming the breaker rubber around a rubber composition capable of forming the tube rubber, winding the composition according to an embodiment of the present invention that forms the rubber layer A around the outside thereof, and further winding a rubber composition capable of forming the cover rubber around the outside thereof, and performing vulcanization, and mouthpieces are attached to both ends of the hose body.

### Examples

An embodiment of the present invention will be described below in detail by way of examples. However, an embodiment of the present invention is not limited to such examples.

### Production of Composition

The components in Table 1 below and the common composition in Table 2 below were mixed with a stirrer to prepare a composition. Note that the amount of each component in the common composition is a blending amount based on 100 parts by mass of the diene rubber (unit: parts by mass).

### •Volume ratio of carbon black

The volume ratio of the carbon black in Table 1 is a calculated value with respect to the total volume of each composition.

Note that in the present invention, the volume ratio of the carbon black is approximately the same before and after vulcanization.

### [Table 1]

**Table 1**

| Composition | Comparative Example 1 | Example 1 | Example 2 | Comparative Example 2 | Comparative Example 3 | Example 3 | Example 4 | Example 5 |
|---|---|---|---|---|---|---|---|---|
| NR | 75 | 75 | 75 | 75 | 75 | 75 | 75 | 60 |
| SBR | 25 | 25 | 25 | 25 | 25 | 25 | 25 | 25 |
| Reclaimed rubber | - | - | - | - | - | - | - | 30 |
| Carbon black | 65 | 60 | 55 | 45 | 40 | 55 | 55 | 55 |
| Aroma oil | 30 | 30 | 30 | 30 | 30 | 30 | 30 | 20 |
| Sulfur | 2.5 | 2.5 | 2.5 | 2.5 | 2.5 | 2.0 | 2.5 | 2.5 |
| Vulcanization accelerator CZ | 1.0 | 1.0 | 1.0 | 1.0 | 1.0 | 1.0 | 1.7 | 1.0 |
| CB Volume Ratio (%) ^{∗}1 | 18.6 | 17.4 | 16.2 | 13.6 | 12.3 | 16.2 | 16.1 | 16.2 |
| TB MPa | 18.5 | 17.0 | 16.4 | 16.3 | 16.0 | 18.9 | 17.1 | 12.2 |
| EB % | 480 | 520 | 530 | 560 | 580 | 600 | 500 | 450 |
| Adhesion to breaker rubber | Good | Good | Good | Good | Good | Poor | Poor | Good |
| Adhesion to cover rubber | Good | Good | Good | Good | Good | Poor | Good | Good |
| Volume resistivity (Ω·cm) *2 | 9.2E + 02 | 6.3E + 03 | 2.0E + 04 | 6.8E + 04 | 4.5E + 05 | 2.3E + 04 | 2.1E + 04 | 1.5E + 04 |

| | | | | | | | | |
|---|---|---|---|---|---|---|---|---|
| * 1 The CB volume ratio does not include carbon black derived from reclaimed rubber. Note that when the rubber composition contains reclaimed rubber, for calculation of the CB volume ratio, the total volume of the rubber composition contains the total amount of reclaimed rubber. *2 In the evaluation results of the volume resistivity, "ME + n" means "M × 10ⁿ". | | | | | | | | |

Details of the components indicated in Table 1 are as follows.
- NR: Natural rubber, STR-20. Density: 0.93 g/cm³ at 20°C
- SBR: Styrene-butadiene rubber. Trade name: Nipol 1502, available from Zeon Corporation. Weight average molecular weight: 5.0 × 10⁵, styrene amount: 23.5% by mass. Density: 0.94 g/cm³ at 20°C
- Reclaimed rubber: reclaimed rubber having a diene rubber content in the reclaimed rubber being 50% by mass. Tire reclaim made by MURAOKA RUBBER RECLAIMING Co., Ltd. The content of carbon black in the reclaimed rubber is 25% by mass. Density of reclaimed rubber (at 20°C): 1.14 to 1.18 g/cm³ (1.16 g/cm³ in the volume calculation). Note that the density of the carbon black contained in the reclaimed rubber (at 20°C) is 1.80 g/cm³.
- Carbon black: HAF grade carbon black Trade name: DIABLACK H, available from Mitsubishi Chemical Corporation. HAF grade carbon black Density: 1.80 g/cm³ at 20°C. Nitrogen adsorption specific surface area: 79 m2/g.
- Aroma oil: trade name: VivaTec 500 H, available from H&R CHEMPHARM (Thailand) Ltd. Weight percentage of aromatic hydrocarbon (C_{A}): 26% by mass. TDAE oil. Density: 0.966 g/cm³ at 20°C
- Sulfur: Oil Treated Sulfur, available from Hosoi Chemical Industry Co., Ltd. Density: 1.92 g/cm³ at 20°C
- Vulcanization accelerator CZ: Sulfenamide-based vulcanization accelerator. NOCCELER CZ-G (available from Ouchi Shinko Chemical Industrial) Density: 1.27 g/cm³ at 20°C

### [Table 2]

**Table 2 (common composition)**

| | |
|---|---|
| Calcium carbonate | 30 |
| Anti-aging agent | 2.0 |
| Wax | 3.0 |
| Zinc oxide | 3.0 |
| Stearic acid | 1.0 |

Details of the components described in Table 2 are as follows.
- Calcium carbonate: calcium carbonate, available from Maruo Calcium Co., Ltd. Density: 2.72 g/cm³ at 20°C
- Anti-aging agent: trade name: OZONONE 6C, available from Seiko Chemical Co., Ltd. Density: 1.05 g/cm³ at 20°C
- Wax: SUNTIGHT R, available from Seiko Chemical Co., Ltd. Density: 0.92 g/cm³ at 20°C
- Zinc oxide: Zinc Oxide III, available from Seido Chemical Industry Co., Ltd. Density: 5.6 g/cm³ at 20°C
- Stearic acid: stearic acid YR, available from NOF CORPORATION Density: 0.92 g/cm³ at 20°C

### Evaluation

The following evaluations were performed using the composition produced as described below. The results are shown in Table 1.

### •Tensile properties (TB, EB)

The composition produced as described above was vulcanized at 150°C with application of surface pressure of 2.0 MPa, and a rubber sheet having a thickness of 2 mm was obtained. Note that, before and after vulcanization, the volume of the rubber composition and the rubber sheet is the same.

A No. 3 dumbbell stipulated in JIS was punched out from the above rubber sheet, and a tensile test was performed at a tensile speed of 500 mm/min in accordance with JIS K6251: 2017, and the tensile strength at break (TB) [MPa] and the elongation at break (EB) (%) were measured.

A larger TB is more preferable. The same applies to the EB.

In practical use, the TB is preferably 15.0 MPa or greater. The EB is preferably 500% or greater.

### •Adhesion to breaker rubber

Using the composition produced as described above, a rubber sheet X having a thickness of 3.0 mm was obtained in an unvulcanized state.

On the other hand, each component shown in Table 3 below was mixed in an amount (part by mass) shown in the same table to obtain a rubber sheet Y (unvulcanized) having a thickness of 3.0 mm.

A vulcanized rubber sheet XY was obtained by superimposing the rubber sheet X and the rubber sheet Y to form a bilayer rubber sheet, and vulcanizing the bilayer rubber sheet under the conditions of 150°C and a surface pressure of 2.0 MPa.

A peeling test was conducted in which one of the two layers was pulled from the vulcanized rubber sheet XY at a speed of 50 mm/min in the 180°peeling direction, and the peeling force (unit: N/inch) was measured.

### ••Evaluation criteria for adhesion to breaker rubber

When the vulcanized rubber sheet XY was not peeled off and the rubber gripped by the chuck of the tester was broken, it was evaluated as being very excellent for the adhesion to a breaker rubber, and this was indicated as "good".

When the vulcanized rubber sheet XY was peeled off and the peeling force in the vulcanized rubber sheet XY was not less than 150 N/inch, it was evaluated as being slightly excellent for the adhesion to a breaker rubber, and this was indicated as "fair".

When the vulcanized rubber sheet XY was peeled off and the peeling force in the vulcanized rubber sheet XY was less than 150 N/inch, it was evaluated as being inferior for the adhesion to a breaker rubber, and this was indicated as "poor".

### [Table 3]

**Table 3 (Breaker rubber blended)**

| | |
|---|---|
| NBR | 80 |
| SBR | 20 |
| CB | 40 |
| Silica | 15 |
| Anti-aging agent | 1 |
| Zinc oxide | 5 |
| Stearic acid | 2 |
| Resorcin | 2 |
| Plasticizer | 10 |
| Sulfur | 2.1 |
| Vulcanization accelerator | 2 |

Details of the components indicated in Table 3 are as follows.
- NBR (acrylonitrile-butadiene rubber). Trade name: Nipol DN 401, available from Zeon Corporation.
- SBR: Styrene-butadiene rubber. Trade name: Nipol 1502, available from Zeon Corporation.
- CB: SRF grade carbon black. Trade name: HTC #S, available from Nippon Steel Carbon Co., Ltd. Density: 1.80 g/cm³ at 20°C. Nitrogen adsorption specific surface area: 25 m²/g.
- Silica: trade name: Nipsil AQ, available from Tosoh Silica Corporation
- Anti-aging agent: trade name: NOCRAC 224, available from Ouchi Shinko Chemical Industrial Co., Ltd.
- Zinc oxide: Zinc Oxide III, available from Seido Chemical Industry Co., Ltd.
- Stearic acid: stearic acid YR, available from NOF CORPORATION
- Resorcin: 1,3-dihydroxybenzene. -Trade name: Resorcinol, available from Sumitomo Chemical Co., Ltd.
- Plasticizer: DINP (diisononyl phthalate), available from New Japan Chemical Co., Ltd.
- Sulfur: Oil treated sulfur, available from Hosoi Chemical Industry Co., Ltd.
- Vulcanization accelerator: Nocceler CZ-G (available from Ouchi Shinko Chemical Industrial Co., Ltd.)

### •Adhesion to a cover rubber

As described above, a rubber sheet X having a thickness of 3.0 mm was obtained in an unvulcanized state using a composition produced by mixing each component in Table 1 and the common composition in Table 2.

On the other hand, the components shown in Table 4 below were mixed in the amounts (parts by mass) shown in the same table, and a rubber sheet Z (unvulcanized) having a thickness of 3.0 mm was obtained.

A vulcanized rubber sheet XZ was obtained by superimposing the rubber sheet X and the rubber sheet Z to form a bilayer rubber sheet, and vulcanizing the bilayer rubber sheet under the conditions of 150°C and a surface pressure of 2.0 MPa.

A peeling test was conducted in which one of the two layers was pulled from the vulcanized rubber sheet XZ at a speed of 50 mm/min in the 180°peeling direction, and the peeling force (unit: N/inch) was measured.

### ••Evaluation criteria for adhesion to a cover rubber

When the vulcanized rubber sheet XZ was not peeled off and the rubber gripped by the chuck of the tester was broken, it was evaluated as being very excellent for the adhesion to a cover rubber, and this was indicated as "good".

When the vulcanized rubber sheet XZ was peeled off and the peeling force in the vulcanized rubber sheet XZ was not less than 150 N/inch, it was evaluated as being slightly excellent for the adhesion to a cover rubber, and this was indicated as "fair".

When the vulcanized rubber sheet XZ was peeled off and the peeling force in the vulcanized rubber sheet XZ was less than 150 N/inch, it was evaluated as inferior for the adhesion to a cover rubber, and this was indicated as "poor".

### [Table 4]

**Table 4 (cover rubber blended)**

| | |
|---|---|
| NR | 100 |
| CB | 50 |
| Plasticizer | 12 |
| Anti-aging agent | 2 |
| Wax | 3 |
| Zinc oxide | 3 |
| Stearic acid | 2 |
| Sulfur | 2.1 |
| Vulcanization accelerator | 1.5 |

Details of the components indicated in Table 4 are as follows.
- NR: Natural rubber, STR-20 [0087]
- CB: HAF grade carbon black Trade name: DIABLACK H, available from Mitsubishi Chemical Corporation. HAF grade carbon black Density: 1.80 g/cm³ at 20°C. Nitrogen adsorption specific surface area: 79 m²/g.
- Plasticizer: aroma oil. Trade name: Vivatec 500 H, available from H&R CHEMPHARM (Thailand) Ltd.
- Anti-aging agent: OZONONE 6C, available from Seiko Chemical Co., Ltd.
- Wax: SUNTIGHT R, available from Seiko Chemical Co., Ltd.
- Zinc oxide: Zinc Oxide III, available from Seido Chemical Industry Co., Ltd.
- Stearic acid: stearic acid YR, available from NOF CORPORATION
- Sulfur: Oil treated sulfur, available from Hosoi Chemical Industry Co., Ltd.
- Vulcanization accelerator: Nocceler CZ-G (available from Ouchi Shinko Chemical Industrial Co., Ltd.)

### •Volume resistivity

As described above, the rubber sheet having a thickness of 2 mm was obtained by vulcanizing the composition produced by mixing the components in Table 1 and the common composition in Table 2 under the conditions of 150°C and a surface pressure of 3.0 MPa.

The volume resistivity of the rubber sheet was measured using a volume resistivity meter under the conditions of 23°C, 50% Rh, and an applied voltage of 500 V in accordance with JIS K6271-2: 2015 (Rubber, vulcanized or thermoplastic - Determination of resistivity - Part 2: Parallel terminal electrode system).

In the present invention, when the volume resistivity is within a predetermined range, the rubber sheet achieves an excellent control of conductivity suited to a semicon hose.

When the volume resistivity is 3.0 × 10³ to 1.0 × 10⁴ Ω · cm, a rubber sheet achieves a more excellent control of conductivity.

As is clear from the results shown in Table 1, in Comparative Example 1, in which the volume ratio of the carbon black exceeded the predetermined range, the volume resistivity of the obtained rubber did not meet the predetermined range, and the conductivity suitable for the semicon hose could not be controlled. Furthermore, the EB of the obtained rubber was low.

In Comparative Examples 2 and 3, in which the volume ratio of the carbon black was less than the predetermined range, the volume resistivity of the obtained rubber did not meet the predetermined range, and the conductivity suitable for the semicon hose could not be controlled.

In contrast, in the composition according to an embodiment of the present invention, the volume resistivity of the obtained rubber satisfied the predetermined range, and the conductivity suitable for the semicon hose can be controlled.

Examples 1 and 2, in which the sulfur content was high, exhibited excellent adhesion to a breaker rubber and adhesion to a cover rubber than those of Example 3, in which the sulfur content was low.

Examples 1 and 2, in which the content of the vulcanization accelerator was low, exhibited excellent adhesion to a breaker rubber and EB than those of Example 4, in which the content of the vulcanization accelerator was high.

Example 1, in which the volume ratio of carbon black was high, exhibited excellent control of the conductivity suitable for semicon hose and excellent TB than those of Example 2.

Examples 1 to 4, in which reclaimed rubber is not contained, exhibited excellent breaking properties than those of Example 5 containing reclaimed rubber. In addition, the variation in volume resistivity of Example 5 was greater than the variation in volume resistivity of Examples 1 to 4.

### Reference Signs List

10 Semicon hose (semicontinuous marine hose
12 Tube rubber
14 Breaker rubber
16 Rubber layer A
18 Cover rubber
20 Mouthpiece
CL Line segment

## Claims

1. A rubber composition for a semicontinuous marine hose comprising: a diene rubber containing at least a natural rubber and a styrene-butadiene rubber; and carbon black;
wherein the carbon black has a volume ratio from 14 to 18%;
wherein the rubber composition has a volume resistivity of from 1.0 × 10³ to 5.0 × 10⁴ Q·cm, the volume resistivity being measured by using a volume resistivity meter under a condition of 23°C, 50% RH, and an applied voltage of 500 V in accordance with JIS K6271-2: 2015; and
wherein a mass ratio of the natural rubber to the styrene-butadiene rubber (natural rubber/styrene-butadiene rubber) is from 30/70 to 80/20.

2. The rubber composition for a semicontinuous marine hose according to claim 1, further comprising sulfur, wherein a content of the sulfur is 2.5 parts by mass or greater with respect to 100 parts by mass of the diene rubber.

3. The rubber composition for a semicontinuous marine hose according to claim 1 or claim 2, further comprising a vulcanization accelerator, wherein a content of the vulcanization accelerator is 1.5 parts by mass or less with respect to 100 parts by mass of the diene rubber.

4. The rubber composition for a semicontinuous marine hose according to any one of claims 1 to 3, further comprising a plasticizer, wherein the plasticizer contains an aroma oil, and a content of the aroma oil is 25 parts by mass or more with respect to 100 parts by mass of the diene rubber.

5. The rubber composition for a semicontinuous marine hose according to any one of claims 1 to 4, which does not substantially contain reclaimed rubber.

6. A semicontinuous marine hose formed by using the rubber composition for a semicontinuous marine hose described in any one of claims 1 to 5.

7. The semicontinuous marine hose according to claim 6, comprising a rubber layer A formed by using the rubber composition for a semicontinuous marine hose.

8. The semicontinuous marine hose according to claim 7, further comprising a cover rubber and a breaker rubber, wherein the cover rubber, the rubber layer A, and the breaker rubber are adjacent in the order of the cover rubber, the rubber layer A and the breaker rubber.

## Patentansprüche

1. Kautschukzusammensetzung für einen halbkontinuierlichen Marineschlauch, umfassend: einen Dienkautschuk, der mindestens einen Naturkautschuk und einen Styrol-Butadien-Kautschuk enthält; und Ruß;
wobei der Ruß ein Volumenverhältnis von 14 bis 18 % einnimmt;
wobei die Kautschukzusammensetzung einen spezifischen Volumenwiderstand von 1,0 × 10³ bis 5,0 × 10⁴ Ω·cm aufweist, und der spezifische Volumenwiderstand unter Verwendung eines Messgeräts für den spezifischen Volumenwiderstand bei 23°C, 50 % relativer Luftfeuchte und einer angelegten Spannung von 500 V gemäß JIS K6271-2: 2015 gemessen wird; und
wobei ein Massenverhältnis des Naturkautschuks zum Styrol-Butadien-Kautschuk (Naturkautschuk/Styrol-Butadien-Kautschuk) 30/70 bis 80/20 beträgt.

2. Kautschukzusammensetzung für einen halbkontinuierlichen Marineschlauch gemäß Anspruch 1, ferner umfassend Schwefel, wobei ein Gehalt des Schwefels bezogen auf 100 Massenteile des Dienkautschuks 2,5 Massenteile oder mehr beträgt.

3. Kautschukzusammensetzung für einen halbkontinuierlichen Marineschlauch gemäß Anspruch 1 oder Anspruch 2, ferner umfassend einen Vulkanisationsbeschleuniger, wobei ein Gehalt des Vulkanisationsbeschleunigers bezogen auf 100 Massenteile des Dienkautschuks 1,5 Massenteile oder weniger beträgt.

4. Kautschukzusammensetzung für einen halbkontinuierlichen Marineschlauch gemäß einem der Ansprüche 1 bis 3, ferner umfassend einen Weichmacher, wobei der Weichmacher ein Aromaöl enthält und ein Gehalt des Aromaöls bezogen auf 100 Massenteile des Dienkautschuks 25 Massenteile oder mehr beträgt.

5. Kautschukzusammensetzung für einen halbkontinuierlichen Marineschlauch gemäß einem der Ansprüche 1 bis 4, die im Wesentlichen keinen wiederaufbereiteten Kautschuk enthält.

6. Halbkontinuierlicher Marineschlauch, gebildet durch Verwendung der Kautschukzusammensetzung für einen halbkontinuierlichen Marineschlauch, der in einem der Ansprüche 1 bis 5 beschrieben ist.

7. Halbkontinuierlicher Marineschlauch gemäß Anspruch 6, umfassend eine Kautschukschicht A, gebildet durch Verwendung der Kautschukzusammensetzung für einen halbkontinuierlichen Marineschlauch.

8. Halbkontinuierlicher Marineschlauch gemäß Anspruch 7, ferner umfassend einen Deckkautschuk und einen Breaker-Kautschuk, wobei der Deckkautschuk, die Kautschukschicht A und der Breaker-Kautschuk in der Reihenfolge des Deckkautschuks, der Kautschukschicht A und des Breaker-Kautschuks benachbart sind.

## Revendications

1. Composition de caoutchouc pour flexible marin semi-continu comprenant : un caoutchouc diénique contenant au moins un caoutchouc naturel et un caoutchouc styrène-butadiène ; et du noir de carbone ;
le noir de carbone ayant un rapport volumique de 14 à 18 % ;
la composition de caoutchouc ayant une résistivité transversale de 1,0 × 10³ à 5,0 × 10⁴ Ω·cm, la résistivité transversale étant mesurée au moyen d'un mesureur de résistivité transversale sous 23 °C, 50 % HR et une tension appliquée de 500 V conformément à la JIS K6271-2:2015 ;
un rapport massique du caoutchouc naturel au caoutchouc styrène-butadiène (caoutchouc naturel/caoutchouc styrène-butadiène) allant de 30/70 à 80/20.

2. Composition de caoutchouc pour flexible marin semi-continu selon la revendication 1, comprenant en outre du soufre, une teneur du soufre étant supérieure ou égale à 2,5 parties en masse pour 100 parties en masse du caoutchouc diénique.

3. Composition de caoutchouc pour flexible marin semi-continu selon la revendication 1 ou la revendication 2, comprenant en outre un accélérateur de vulcanisation, une teneur de l'accélérateur de vulcanisation étant inférieure ou égale à 1,5 partie en masse pour 100 parties en masse du caoutchouc diénique.

4. Composition de caoutchouc pour flexible marin semi-continu selon l'une quelconque des revendications 1 à 3, comprenant en outre un plastifiant, le plastifiant contenant une huile aromatique, et une teneur de l'huile aromatique étant supérieure ou égale à 25 parties en masse pour 100 parties en masse du caoutchouc diénique.

5. Composition de caoutchouc pour flexible marin semi-continu selon l'une quelconque des revendications 1 à 4, qui ne contient sensiblement pas de caoutchouc de récupération.

6. Flexible marin semi-continu formé en utilisant la composition de caoutchouc pour flexible marin semi-continu décrite dans l'une quelconque des revendications 1 à 5.

7. Flexible marin semi-continu selon la revendication 6, comprenant une couche de caoutchouc A formée en utilisant la composition de caoutchouc pour flexible marin semi-continu.

8. Flexible marin semi-continu selon la revendication 7, comprenant en outre un caoutchouc de couverture et un caoutchouc de rupture, le caoutchouc de couverture, la couche de caoutchouc A et le caoutchouc de rupture étant adjacents dans l'ordre formé par le caoutchouc de couverture, la couche de caoutchouc A et le caoutchouc de rupture.
